# EUROPÄISCHE PATENTSCHRIFT

(11) **EP 2 733 025 B1**
(45) Veröffentlichungstag und Bekanntmachung des Hinweises auf die Patenterteilung: **29.06.2016**
(21) Anmeldenummer: 13194097.5
(22) Anmeldetag: 22.11.2013
(51) Int. Cl.: B60R 21/38

(54) **Fronthaubenscharnier mit pyrotechnischer Antriebsvorrichtung**
Bonnet hinge with a pyrotechnic driving device
Charnière de capot frontal avec un dispositif d'entraînement pyrotechnique

(43) Veröffentlichungstag der Anmeldung: 21.05.2014
(73) Patentinhaber: Metalsa Automotive GmbH, 51702 Bergneustadt (DE)
(72) Erfinder: Kern, Alexander, 51597 Morsbach (DE)
(74) Vertreter: Rebbereh, Cornelia

(56) Entgegenhaltungen:
- EP-A1- 1 431 136
- WO-A1-95/33637
- DE-A1- 4 304 492

## Beschreibung

Die Erfindung betrifft ein Fronthaubenscharnier zur gelenkigen Anordnung einer Fronthaube an einem Kraftfahrzeug, mit
- einem mit einem Karosseriebauteil verbindbaren Scharnierunterteil und
- einem mit der Fronthaube verbindbaren Scharnieroberteil, wobei das Scharnieroberteil
   - einen gelenkig mit dem Scharnierunterteil verbundenen Grundkörper und
   - ein an der Fronthaube anordbares, gelenkig mit dem Grundkörper verbundenes und gegenüber diesem zwischen einer Normallage und einer Crashlage verstellbares Klappenteil aufweist, und
- einer Antriebsvorrichtung mit einem pyrotechnischen Gasgenerator, der derart mit dem Klappenteil in Wirkverbindung befindlich ist, dass eine Aktivierung des Gasgenerators eine Verlagerung des Klappenteils aus der Normallage in die Crashlage bewirkt.

Das Dokument EP1431136 A stellt den gattungsbildenden stand der Technik entsprechend dem Oberbergriff des Anspruchs 1 dar.

Fronthaubenscharniere der eingangs genannten Art sind bereits in vielfältigen Ausgestaltungen aus dem Stand der Technik bekannt. Sie dienen zur schwenkbaren Aufnahme der Fronthaube, bspw. einer Motorhaube eines Kraftfahrzeugs, und können zwischen einer Schließposition, in der die Haube - in der Regel gesichert durch ein Haubenschloss - einen Motorraum überdeckt, und einer Öffnungsposition, welche den Zugang zu einem unter der Fronthaube angeordneten Motorraum ermöglicht, verstellt Werden.

Zur Verringerung der Schwere von Personenschäden bei Unfällen, bei denen die Personen mit der Fronthaube des Kraftfahrzeugs in Kontakt kommen, werden zunehmend höhere Anforderungen an die Fahrzeughersteller gestellt, um den Fußgängerschutz zu verbessern. Wesentlich ist dabei, dass gewährleistet werden muss, dass vorgeschriebene HIC-Werte (Kopfaufprall auf der Fronthaube) erreicht werden. Hierzu werden bspw. für den Fall, dass zwischen der Fronthaubenunterseite und den darunter angeordneten Fahrzeugkomponenten, bspw. einem Motorblock, nicht genügend Raum zur Energieabsorbierung bei einem Aufprall auf die Fronthaube durch deren Deformation zur Verfügung steht, vermehrt aktive Systeme eingesetzt, bei denen die Fronthaube im Falle eines Unfalls mittels einer Antriebsvorrichtung aufgestellt wird, um unterhalb der Fronthaube einen geeignet großen Verformungsraum zu schaffen.

Bekannte Systeme, die eine Aufstellung einer Fronthaube bewirken, weisen in der Regel einen sehr komplexen Aufbau auf und müssen mit ebenfalls komplex aufgebauten Antriebsvorrichtungen kombiniert werden, um im Crashfall in kürzester Zeit eine Verlagerung der Fronthaube zu gewährleisten, bevor es zum Peistinenaufprall auf die Frorithaube kommt. Im Falle der Verwendung pyrotechnischer Gasgeneratoren erfolgt die Verlagerung aufgrund einer linearen Verstellung eines Hubkolbens, was einen großen Bauraum für die Antriebsvorrichtung erforderlich macht.

Der Erfindung liegt die Aufgabe zugrunde, ein Fronthaubenscharnier der eingangs genannten Art bereit zu stellen, das sich besonders kostengünstig herstellen lässt, eine kompakte Bauform aufweist und eine hohe Funktiorissicherheit besitzt.

Die Erfindung löst die Aufgabe durch ein Fronthaubenscharnier mit den Merkmalen des anspruchs 1. Vorteilhafte Weiterbildungen der Erfindung sind in den abhängigen Ansprüchen angegeben.

Wesentlich für das erfindungsgemäße Fronthaubenscharnier ist, dass die Antriebsvorrichtung einen pyrotechnischen Gasgenerator aufweist und derart mit dem Klappenteil in Wirkverbindung befindlich ist, dass eine Aktivierung des Gasgenerators eine Verlagerung des Klappenteils in die Crashlage bewirkt. Bei dem erfindungsgemäßen Fronthaubenscharnier bewirkt die Antriebsvorrichtung im Falle einer Aktivierung des ihr zugeordneten Gasgenerators eine aktive Verstellung des Klappenteils aus der Normallage in die Crashlage. Durch die Aktivierung des Gasgenerators wird so das zweiteilig aufgebaute Scharnieroberteil gegenüber seiner Normallage im Normalbetrieb in der Weise betätigt, dass das Klappenteil sich von dem Grundkörper abhebt, so dass eine mit dem Klappenteil verbundene Fronthaube sich gegenüber ihrer Normallage am Fahrzeug aufstellt.

Die Verwendung der Antriebsvorrichtung erlaubt es aufgrund des pyrotechnischen Gasgenerators auf separate Antriebe, bspw. komplexe, vorgespannte Systeme zu verzichten. Der bei der Aktivierung des Gasgenerators auftretende Gasdruck kann in einfacher Weise dazu genutzt werden, um über die Antriebsvorrichtung, welche mit dem Klappenteil in Wirkverbindung befindlich ist, zuverlässig eine schlagartige Verlagerung des Klappenteils gegenüber dem Grundkörper zu bewirken.

Zur Umwandlung des bei der Aktivierung des pyrotechnischen Gasgenerators erzeugten Gasdrucks in eine Verlagerungsbewegung des Klappenteils ist dabei erfindungsgemäß vorgesehen, dass die Antriebsvorrichtung einen auf einer Antriebswelle angeordneten Antriebskörper aufweist, der derart mit dem Gasgenerator in Wirkverbindung befindlich ist, dass der bei einer Aktivierung des Gasgenerators auftretende Gasdruck bzw. austretende Gasstrom eine eine Verdrehung der Antriebswelle erzeugende Verschwenkung oder Verdrehung des Antriebskörpers bewirkt. Hierdurch wird in besonders einfacher Weise eine Umwandlung des Gasdrucks in eine mechanisch nutzbare Rotationsbewegung der Antriebswelle erreicht. Bei einer Aktivierung des Gasgenerators wirkt der Gasdruck auf den Antriebskörper, wodurch dieser verschwenkt oder verdreht wird und dadurch aufgrund der Verbindung mit der Antriebswelle diese in Rotation versetzt. Diese Umwandlung des auftretenden Gasdrucks in eine Bewegung der Antriebswelle zeichnet sich durch ihren einfachen und kostengünstigen sowie zuverlässigen Aufbau aus. Über die festlegbare Verdreh- oder Verschwenkbewegung des Antriebskörpers lässt sich dabei auch in besonders einfacher Weise die Rotationsbewegung der Antriebswelle an die Anforderungen anpassen. Zudem lässt sich die Antriebsvorrichtung besonders kompakt und kostengünstig herstellen, so dass sich das Fronthaubenscharnier in seiner Größe nur unwesentlich von solchen Haubenscharnieren ohne Personensicherheitsfunktion unterscheidet.

Der Antriebskörper kann dabei bspw. durch einen Flügelrotor oder dergleichen gebildet sein. Nach einer Weiterbildung der Erfindung ist jedoch vorgesehen, dass der Antriebskörper durch einen verdrehfest auf der Antriebswelle angeordneten Schwenkhebel gebildet ist, der in einem Gehäuse der Antriebsvorrichtung an einer Gehäuseinnenwand abdichtend anliegend zwischen einer Ausgangslage und einer Endlage verschwenkbar gelagert ist. Die gemäß dieser Weiterbildung vorgesehene Ausgestaltung des Antriebskörpers als Schwenkhebel lässt eine besonders kompakte Ausgestaltung der Antriebsvorrichtung zu. Der bei einer Aktivierung auftretende Gasdruck bewirkt im Zusammenwirken mit dem Schwenkhebel dessen Verlagerung aus der Ausgangslage in die Endlage, wobei aufgrund der Kopplung des Schwenkhebels mit der Antriebswelle eine Verdrehung der Antriebswelle erzeugt wird. Das über die Antriebsvorrichtung erzeugbare Moment ist dabei nicht nur über die Auswahl des Gasgenerators, sondern darüber hinaus auch über die Ausgestaltung des Schwenkhebels in einfacher Weise festlegbar, wobei aufgrund der vorteilhafter Weise vorgesehenen abdichtenden Anlage des Schwenkhebels an der Gehäuseinnenwand während der Verschwenkbewegung zwischen der Ausgangslage und der Endlage eine effiziente Nutzung des aufiretenden Gasdrucks gewährleistet ist. Zur Abdichtung kann bspw. eine Dichtauflage verwendet werden, welche vorteilhafter Weise aus Kunststoff besteht und auf der dem Gasgenerator zugewandten Seite des Schwenkhebels angeordnet ist.

Die Umwandlung der durch eine Aktivierung eines Gasgenerators erzeugten Rotationsbewegung der Antriebswelle derart, dass das Klappenteil gegenüber dem Grundkörper verstellt wird, kann grundsätzlich in beliebiger Weise erfolgen. Nach einer besonders vorteilhaften Ausgestaltung der Erfindung ist jedoch vorgesehene, dass die Antriebswelle mit einem mit dem Grundkörper oder dem Klappenteil in Wirkverbindung befindlichen Kopplungelement verbunden ist. Die Verwendung eines zusätzlichen Kopplungselements, welches aufgrund der Verdrehung der Antriebswelle eine nutzbare Verstellung erfährt, ermöglicht in ergänzender Weise eine Übersetzung der Verdrehbewegung der Antriebswelle in eine Verstellbewegung des Klappenteils gegenüber dem Grundkörper. Über das Kopplungselement bestehen damit vielfältige Möglichkeiten, die Aufstellbewegung in einfacher Weise an die Anforderungen der Fahrzeughersteller anzupassen.

Nach einer besonders vorteilhaften Weiterbildung der Erfindung ist vorgesehen, dass die Antriebsvorrichtung ortsfest mit dem Klappenteil verbunden ist und als Kopplungselement einen verdrehfest auf der Antriebswelle angeordneten Gleithebel aufweist, der derart mit einem an dem Grundkörper angeordneten Führungsbolzen in Eingriff befindlich ist, dass eine Verstellung des Gleithebels aus seiner der Ausgangslage des Schwenkhebels zugeordneten Position in seine der Endlage des Schwenkhebels zugeordneten Position eine Verlagerung des Klappenteils in die Crashlage bewirkt.

Gemäß dieser Ausgestaltung der Erfindung ist das Kopplungselement durch einen Gleithebel gebildet, welcher bei einer Aktivierung der Antriebsvorrichtung aufgrund seiner verdrehfesten Anordnung auf der Aütriebswelle um die Rotationsachse der Antriebswelle verschwenkt wird. Die Kopplung des Gleithebels an einen Führungsbolzen, welcher mit dem Grundkörper verbunden ist, bewirkt dabei aufgrund der gelenkigen Verbindung des Gründkörpers mit dem Klappenteil eine Verlagerung des Klappenteils gegenüber dem Grundkörper in die Crashlage. Die Ausgestaltung der Verbindung zwischen dem Klappenteil und dem Grundkörper über den Gleithebel und den Führungsbolzen, lässt sich dabei in besonders einfacher und kostengünstiger Weise ausgestalten und gewährleistet zudem im Falle einer Aktivierung der Antriebsvorrichtung eine besonders zuverlässige Verstellung des Klappenteils in die Crashlage, wobei der Gleithebel darüber hinaus auch zur Führung des Klappenteils während der Verstellbewegung genutzt werden kann, so dass ungewünschte Bewegungen des Klappenteils vermieden werden können.

Gemäß einer besonders vorteilhaften Ausgestaltung der Erfindung ist dabei vorgesehen, dass der Gleithebel über eine Innenkontur verstellbar an dem Führungsbolzen gelagert ist. Der Führungsbolzen ist dabei an die Innenkontur angepasst, sodass über die Innenkontur die Bewegung des Klappenteils gegenüber dem Grundkörper festgelegt ist. Bei der Aufstellbewegung stützt sich der Gleithebel über die Innenkontur an dem Führungsbolzen ab. Gleichzeitig kann über die Ausgestaltung des Führungsbolzens, und dessen Zusammenwirken mit der Innenkontur, gewährleistet werden, dass eine besonders zuverlässige und gleichförmige Aufstellung des Klappenteils erfolgt, wobei Fehlbewegurigen aufgrund der Führungsmöglichkeit besonders zuverlässig ausgeschlossen werden können.

Nach einer alternativen Ausgestaltung zur ortsfesten Anordnung der Antriebsvorrichtung an dem Klappenteil, ist nach einer weiteren Ausgestaltung der Erfindung vorgesehen, dass die Antriebsvorrichtung ortsfest an dem Grundkörper angeordnet ist und einen verdrehfest mit der Antriebswelle verbundenen Mitnehmer, insbesondere eine Mitnehmerscheibe, aufweist, der mit einem drehbar an der Antriebsvorrichtung gelagerten und mit einer Verzahnung an dem Klappenteil in Eingriff befindlichen Zahnrad in Wirkverbindung befindlich ist. Gemäß dieser Ausgestaltung der Erfindung erfolgt die Anordnung der Antriebsvorrichtung ortsfest an dem Grundkörper, sodass bei einer Aktivierung der Antriebsvorrichtung diese das Klappenteil gegenüber dem Grundkörper und der mit dem Grundkörper verbundenen Antriebsvorrichtung verstellt. Zur Verstellung dient dabei, anders als bei der zuvor dargestellten Ausgestaltung der Erfindung unter Verwendung eines Gleithebels, ein an der Antriebsvorrichtung drehbar gelagertes und über die Antriebswelle antreibbares Zahnrad dazu, das Klappenteil gegenüber dem Grundkörper in die Crashlage zu verstellen. Das Zahnrad greift dabei in eine entsprechend ausgebildete Verzahnung an dem Klappenteil ein, so dass die Verdrehung des Zahnrades in eine Verlagerungsbewegung des Klappenteils umgewandelt werden kann. Das Zahnrad ist gemäß dieser Weiterbildung der Erfindung dabei nicht unmittelbar mit der Antriebswelle verbunden. Zur Übertragung dient vielmehr ein mit der Antriebswelle verdrehfest verbundener Mitnehmer, bspw. eine Mitnehmerscheibe, welche über bspw. eine Nockenverbindung das Zahnrad bei einer Verdrehung der Mitnehmerscheibe verdreht.

Die Verwendung einer Mitnehmerscheibe, bzw. eines Mitnehmers, ermöglicht es in einfacher Weise, die Verdrehbewegung der Antriebswelle zu übersetzen oder einen Leerhub vorzusehen, innerhalb dessen über die Mitnehmerscheibe, bzw. den Mitnehmer bspw. weitere Verstellungen vorgenommen werden können. So kann der Mitnehmer u. a. dazu genutzt werden, eine Spiralfeder vorzuspannen, welche nach einer besonders vorteilhaften Ausgestaltung der Erfindung das Klappenteil gegenüber dem Grundkörper in der Crashlage in Richtung auf die Crashlage vorspannt. Eine Vorspannung gewährleistet dabei in besonders zuverlässiger Weise eine hohe Energieabsorbierung beim Aufprall auf die Fronthaube, die dann entgegen der Federvorspannung unter Energieabbau in Richtung auf ihre Normallage rückverlagert wird.

Die vorteilhafter Weise vorgesehene Abstützung über eine Spiralfeder, die an dem Klappernteil und dem Mitnehmer abgestützt ist, erlaubt es, über die Verstellung des Mitnehmers, die Federvorspannung des Klappenteils einzustellen. Der Mitnehmer, bspw. die Mitnehmerscheibe, kann dabei die Spiralfeder über die gesamte, durch die Antriebswelle erzeugte Verstellbewegung vorspannen oder aber über eine geeignete Ausgestaltung der Mitnehmerscheibe auch über einen nur begrenzten Bereich eine Vorspannung der Spiralfeder bewirken.

Das erfindungsgemäße Fronthaubenscharnier zeichnet sich unter anderem dadurch aus, dass im Normalbetrieb das Klappenteil über die Antriebsvorrichtung zuverlässig an dem Grundkörper angeordnet ist, so dass sich dieses Scharnieroberteil wie ein Scharnieroberteil eines herkömmlichen Fronthaubenscharniers verhält. Eine Verlagerung des Klappenteils gegenüber dem Grundkörper erfolgt nur bei einer Aktivierung der Antriebsvorrichtung. Zur ergänzenden Lagesicherung des Klappenteils an dem Grundkörper ist jedoch nach einer weiteren Ausgestaltung der Erfindung vorgesehen, dass das Klappenteil in der Normallage über ein Verriegelungselement an dem Grundkörper festgelegt ist. Die Verwendung eines Verriegelungselements gewährleistet in besonders zuverlässiger Weise eine lagesichere Anordnung des Grundkörpers an dem Klappenteil im Normalbetrieb. Die Entriegelbarkeit des Verriegelungselements ermöglicht dabei jedoch, im Falle einer Aktivierung der Antriebsvorrichtung, die gewünschte Verlagerung des Klappenteils zu erzielen.

Die Ausgestaltung der Entriegelbarkeit des Verriegelungselements im Falle einer Aktivierung der Antriebsvorrichtung ist dabei grundsätzlich frei wählbar. Nach einer besonders vorteilhaften Ausgestaltung der Erfindung ist das entriegelbare Verriegelungselement durch ein mit dem Grundkörper und dem Klappenteil verbundenes, eine Sollbruchstelle aufweisendes, Halteelement gebildet, wobei die Sollbruchstelle derart ausgebildet ist, dass diese durch die bei der Aktivierung des Gasgenerators auf das Halteelement wirkende Belastung bricht. Diese Ausgestaltung des entriegelbaren Verriegelungselements lässt sich besonders einfach und kostengünstig herstellen. Aufgrund der vorhersehbaren, durch den Gasgenerator erzeugten und über die Antriebsvorrichtung übertragenen Belastung, lässt sich das Halteelement besonders einfach und kostengünstig in der Art ausgestalten, dass es bei einer Aktivierung im Bereich der Sollbruchstelle aufbricht; so dass dann die gewünschte Verlagerung des Klappenteils in die Crashlage erfolgen kann.

Nach einer alternativen Ausgestaltung der Erfindung ist vorgesehen, dass das Verriegelungselement durch ein Sperrelement gebildet ist, das in der Antriebsvorrichtung zwischen einer das Klappenteil an dem Grundkörper festlegenden Verriegelungsstellung und einer das Klappenteil gegenüber dem Grundkörper freigebenden Entriegelungsstellung verstellbar ist. Diese alternative Ausgestaltung des Verriegelungselements sieht eine Verlagerung des Sperrelements vor, damit das Klappenteil gegenüber dem Grundkörper verstellt werden kann. Das Sperrelement lässt sich dabei besonders einfach herstellen und gewährleistet im Normalbetrieb eine besonders hohe Lagesicherung. Darüber hinaus kann das Sperrelement zu einer erneuten Arretierung des Klappenteils an dem Grundkörper genutzt werden, nachdem die Funktionsfähigkeit des Sperrelements, anders als bei dem mit einer Sollbruchstelle ausgestatteten Halteelement, auch nach der Aktivierung gegeben ist.

Die Verlagerung des Sperrelements aus der Verriegelungsstellung in die Entriegelungsstellung im Falle einer Aktivierung des Gasgenerators, lässt sich dabei nach einer besonders vorteilhaften Weiterbildung der Erfindung in besonders einfacher Weise dadurch realisieren, dass das Sperrelement derart in der Antriebsvorrichtung angeordnet ist, dass eine Aktivierung des Gasgenerators eine Verlagerung des Sperrelements aus der Verriegelungsstellung in die Entriegelungsstellung bewirkt. Gemäß dieser Ausgestaltung der Erfindung wird der bei einer Aktivierung des Gasgenerators erzeugte Gasdruck auch dazu genutzt, um eine Verlagerung des Sperrelements zu bewirken, wobei der Gasdruck hierzu bevorzugt direkt as dem Sperrelement angreift. Auf separate Mittel zur Entriegelung des Sperrelements kann somit verzichtet werden. Eine entsprechende Ausgestaltung der Antriebsvorrichtung zeichnet sich dabei durch ihre besonders hohe Zuverlässigkeit aus. Darüber hinaus besteht die Möglichkeit der kostengünstigen Weiterverwendung des Fronthaubenscharniers, da zu dessen Instandsetzung lediglich der Gasgenerator getauscht werden muss, was aufgrund einer vorteilhafter Weise vorgesehenen Befestigung mittels einer Schraube einfach und kostengünstig realisierbar ist.

Besonders vorteilhafter Weise ist vorgesehen, dass das Sperrelement durch einen verschiebbar gelagerten Verriegelungsbolzen gebildet ist, der bei einer ortsfest an dem Grundkörper angeordneten Antriebsvorrichtung in der Verriegelungsstellung in eine an dem Klappenteil ausgebildete Aufnahmeöffnung eingreift.

Ausführungsbeispiele der Erfindung werden nachstehend mit Bezug auf die Zeichnungen erläutert. In den Zeichnungen zeigen:
- Fig. 1: in einer Seitenansicht eine erste Ausführungsform eines Fronthaubenscharniers in einer Normallage eines Scharnieroberteils;
- Fig. 2: in einer Seitenansicht das Fronthaubenscharnier von Fig. 1 mit einem in einer Crashlage befindlichen Scharnieroberteil;
- Fig. 3: in einer Seitenansicht eine zweite Ausführungsform eines Fronthaubenscharniers in einer Normallage des Scharnieroberteils;
- Fig. 4: in einer Seitenansicht ein Klappenteil des Fronthaubenscharniers von Fig. 3;
- Fig. 5: in einer Seitenansicht eine Antriebsvorrichtung des Fronthaubenscharniers von Fig. 3 mit geöffnetem Gehäuse und
- Fig. 6: eine Ansicht eines Schnitts des Klappenteils von Fig. 4 entlang der Schnittlinie A-A.

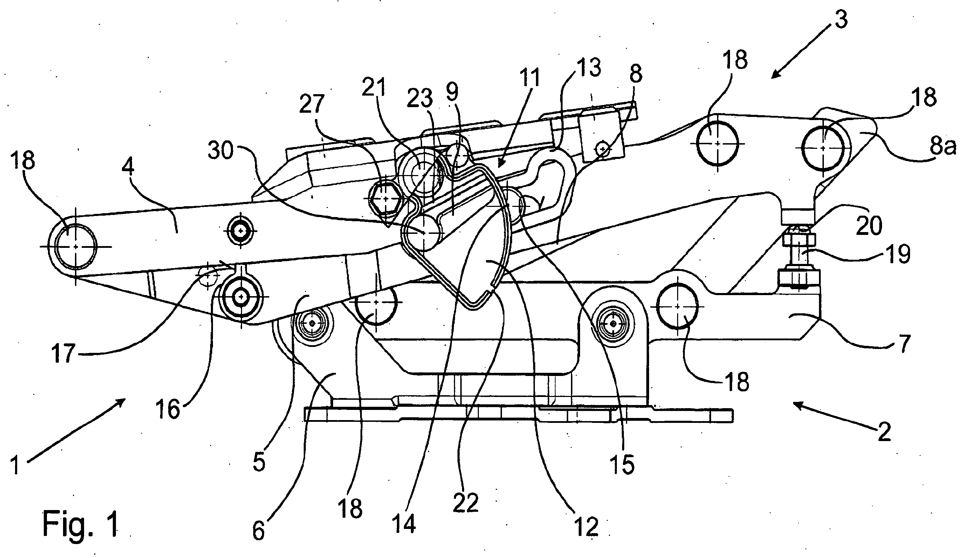

In Figur 1 ist ein erstes Ausführungsbeispiel eines Fronthaubenscharniers 1 in dessen Schließlage mit einem in einer Normallage angeordneten Scharnieroberteil 3 dargestellte.

Das Scharnieroberteil 3 befindet sich dabei mit einer Anschlagfläche 20 in Kontakt mit einem Anschlagelement 19 des Scharnierunterteils 2. Dieses weist ein mit einer hier nicht dargestellten Karosserie verbindbares Karosserieteil 6 und ein mit dem Karosserieteil 6 verschraubten Grundträger 7 auf. Scharnierunterteil 2 und Scharnieroberteil 3 sind unter Verwendung von Gelenkbolzen 18 über zwei Gelenkhebel 8, 8a miteinander verbunden. Im Normalbetrieb erlaubt diese Verbindung eine Verschwenkung einer hier nicht dargestellten Motorhaube gegenüber der Fahrzeugkarosserie.

Das Scharnieroberteil 3 ist, wie auch das Scharnierunterteil 2, zweiteilig ausgebildet. So ist der gelenkig mit dem Grundträger 7 des Scharnierunterteils 2 verbundene Grundkörper 5 des Scharnieroberteils 3 über einen Gelenkbolzen 18 mit einem Klappenteil 4 verbunden, über welches die hier nicht dargestellte Fronthaube an dem Scharnieroberteil 3 befestigt wird. Im Normalbetrieb ist das Klappenteil 4 über eine nicht aktivierte Antriebsvorrichtung 11 sowie zusätzlich über ein mit dem Klappenteil 4 und dem Grundkörper 5 verbundenes Verriegelungselement 16 an dem Grundkörper 5 festgelegt. Das Verriegelungselement 16 weist dabei eine Sollbruchstelle 17 auf, welche im Falle einer festgelegten Belastung aufbricht.

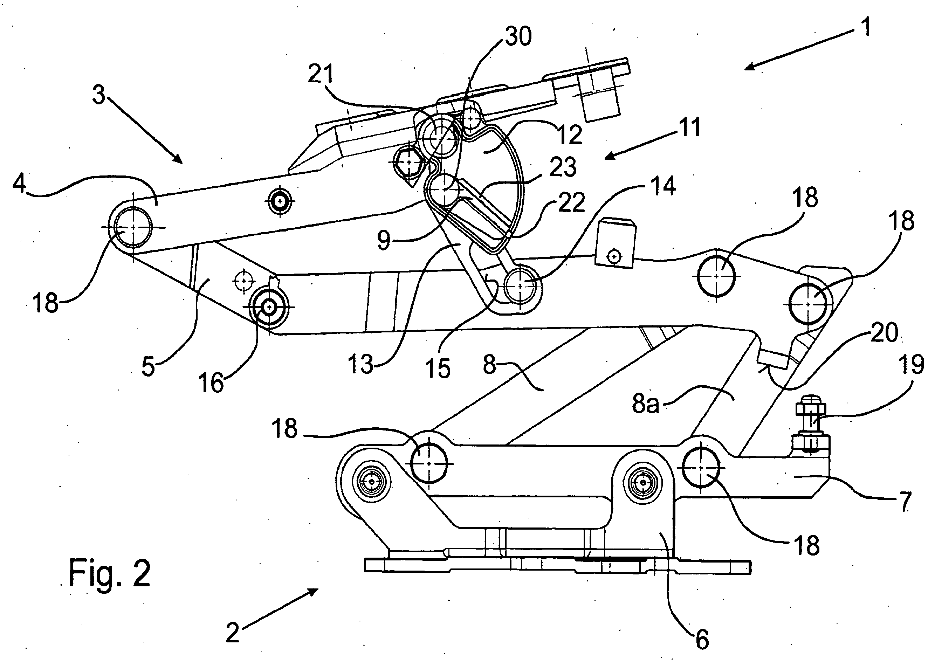

Die Antriebsvorrichtung 11 des Fronthaubenscharniers 1 ist ortsfest an dem Klappenteil 4 festgelegt. Innerhalb eines Gehäuses 12 der Antriebsvorrichtung 11 ist ein Schwenkhebel 9 zwischen der in Figur 1 dargestellten Normallage und der in Figur 2 dargestellten Crashlage verschwenkbar angeordnet. Die Verschwenkbewegung des Schwenkhebels 9 wird dabei durch die Aktivierung eines mit dem Innenraum des Gehäuses 12 verbundenen Gasgenerators 21 erzeugt. Bei einer Aktivierung des Gasgenerators 21 wirkt der entstehende Gasdruck auf den Schwenkhebel 9 und verschwenkt diesen in die in Figur 2 dargstellte Endlage des Schwenkhebels 9.

Der Schwenkhebel 9 ist verdrehfest auf einer Antriebswelle 30 angeordnet, welche ihrerseits verdrehfest mit einem Gleithebel 13 verbunden ist. Eine Verschwenkbewegung des Schwenkhebels 9 bewirkt somit eine Verschwenkbewegung des Gleithebels 13 aus der in Figur 1 dargestellten Ausgangslage in die in Figur 2 dargestellte Endlage. Die Verbindung des Gleithebels 13 über eine Innenkontur 15 mit einem an dem Grundkörper 5 angeordneten Führungsbolzen 14 bewirkt dabei, dass sich der Gleithebels 13 an deren Führungsbolzen 14 abstützt und dabei das Klappenteil 4 von dem Grundkörper 5 abhebt und in die in Figur 2 dargestellte Crashlage verschwenkt.

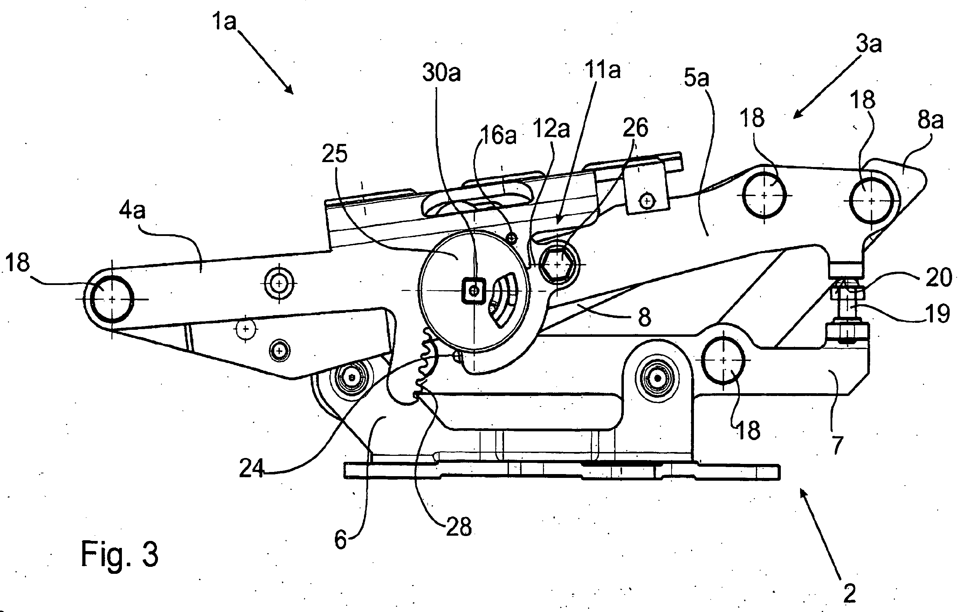

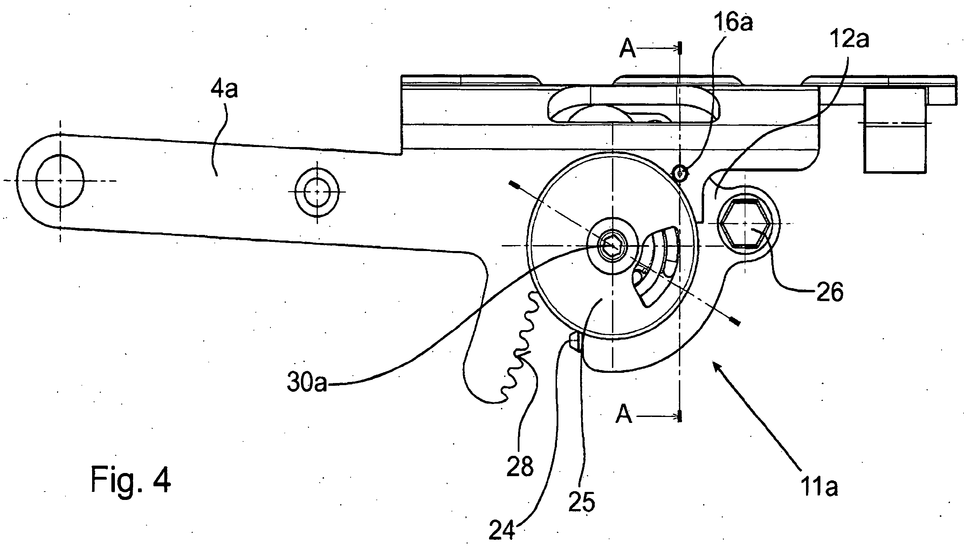

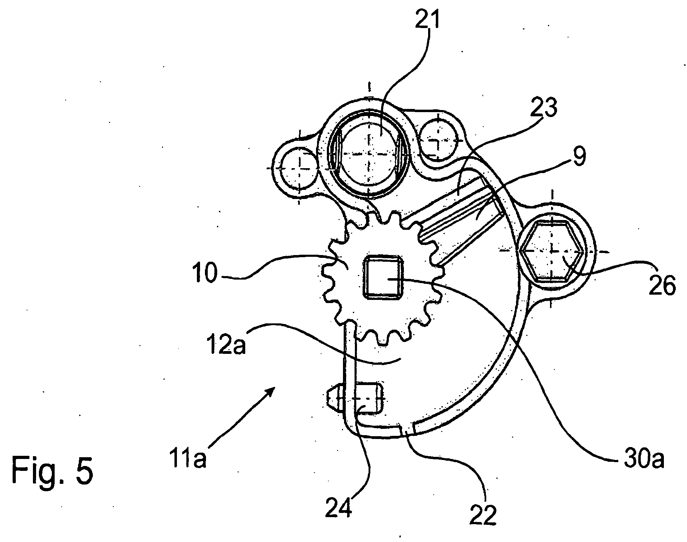

Eine zweite Ausführungsform des Fronthaubenscharniers 1a ist in den Figuren 3 bis 6 dargestellt. Wie auch das in den Figuren 1 und 2 dargestellte Fronthaubenscharnier 1 so weist auch das in den Figuren 3 bis 6 dargestellte Fronthaubenscharnier 1a ein mit der Fahrzeugkarosserie verbindbares Scharnierunterteil 2, bestehend aus einem Karosserieteil 6 und einem Grundträger 7, auf. Das Scharnierunterteil 2 ist ebenfalls über zwei Gelenkhebel 8, 8a mit dem Scharnieroberteil 3a verbunden, wobei die Anlenkung der Gelenkhebel 8, 8a einenends über sich durch den Grundträger 7 und anderenends sich durch einen Grundkörper 5a des Scharnieroberteils 3a erstreckende Gelenkbolzen hergestellt ist.

In der in Figur 3 dargestellten Schließlage des Fronthaubenscharniers 1a liegt das Scharnieroberteil 3a über die Anschlagfläche 20 an dem Anschlagelement 19 des Scharnierunterteils 2 an. Das Scharnieroberteil 3 ist, wie auch das in Figur 1 und 2 dargestellte Scharnieroberteil 3, zweiteilig ausgebildet und weist den Grundkörper 5a sowie ein gelenkig mit dem Grundkörper 5a über einen Gelenkbolzen 18 verbundenes, Klappenteil 4a auf, welches zur Anordnung an einer Fronthaube ausgebildet ist.

Zur Verlagerung des Klappenteils 4a gegenüber dem Grundkörper 5a im Falle eines Crashs dient eine Antriebsvorrichtung 11a, welche ortsfest an dem Grundkörper 5a mittels einer Befestigungsschraube 26 befestigt ist. Wie auch die Antriebsvorrichtung 11 des in Fig. 1 und 2 dargestellten Fronthaubenscharniers 1, so weist auch die Antriebsvorrichtung 11a des Fronthaubenscharniers 1a einen in einem Gehäuse 12a schwenkbar gelagerten Schwenkltebel 9 auf, welcher mit dem Gasstrom bzw. Gasdruck eines Gasgenerators 21 in Eingriff bringbar ist. Bei einer Aktivierung des Gasgenerators 21 wirkt der Gasdruck auf eine mit einer Dichtauflage 23 versehenen Fläche des Schwenkhebels 9 und verlagert diesen dann in die Endlage, in der der Schwenkhebel 9 mit einem innerhalb des Gehäuses 12a angeordneten Dämpfungselement 24 in Kontakt gelangt. Eine Gasaustrittsöffnung 22 innerhalb des Gehäuses 12a gewährleistet dabei, dass der Schwenkhebel 9 störungsfrei aus der Ausgangslage in die Endlage verschwenkt werden kann.

Der Schwenkhebel 9 ist über eine Antriebswelle 30a mit einer Mitnehmerscheibe 25 verdrehfest verbunden, so dass eine Verdrehung des Schwenkhebels 9 eine Verdrehung der Antriebswelle 30a und damit der Mitnehmerscheibe 25 bewirkt. Die Mitnehmerscheibe 25 weist ihrerseits einen mit einem Zahnrad 10 in Eingriff bringbaren, hier nicht dargestellten Nocken auf, so dass eine Verdrehung der Mitnehmerscheibe 25 eine Verdrehung des Zahnrads 10 der Antriebsvorrichtung 11a bewirkt. Bei einer Verdrehung des Zahnrads 10 gelangt dieses mit einer Verzahnung 28 an dem Klappenteil 4a in Eingriff und verlagert dadurch das Klappenteil 4a aus seiner Normallage in eine Crashlage.

Die Mitnehmerscheibe 25 ist zudem mit einer Spiralfeder in Eingriff, die anderenends an dem Klappenteil 4a abgestützt ist. Bei einer Verdrehung der Mitnehmerscheibe 25 wird die Spiralfeder vorgespannt, so dass das Klappenteil 4a in der Crashlage entgegen dem Grundkörper 5a vorgespannt ist. Im Falle eines Crashs kann durch eine Verlagerung des Klappenteils 4a entgegen der Federvorspannung ein Energieabbau erfolgen.

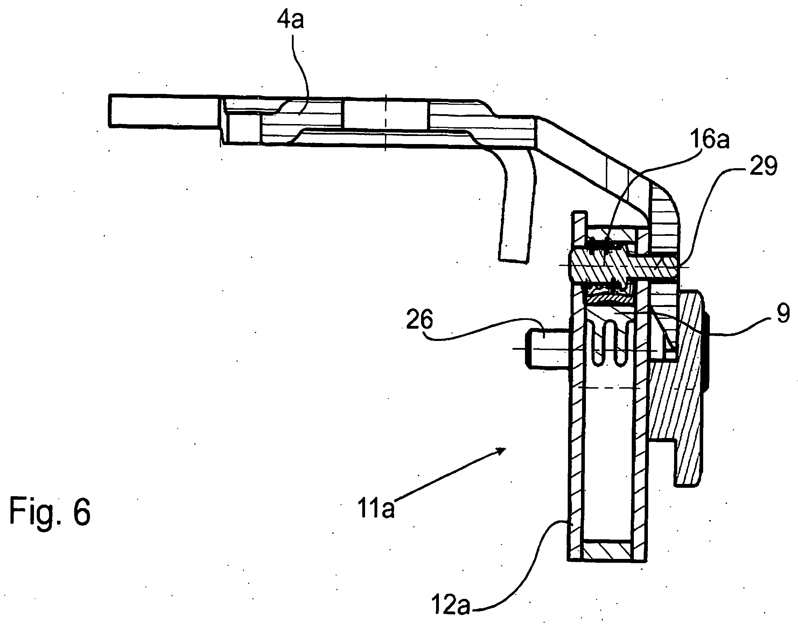

Zur Lagesicherung des Klappenteils 4a an dem Grundkörper 5a in der Normallage, weist die Antriebsvorrichtung 11a ein als Bolzen ausgebildetes Verriegelungselement 16a auf, welches in der Normallage in eine Öffnung 29 an dem Klappenteil 4a eingreift. Eine Aktivierung des Gasgenerators 21 bewirkt, aufgrund des entstehenden Gasdrucks, eine automatische Verlagerung des Verriegelungselements 16a aus der in Figur 6 dargestellten Verriegelungsstellung in eine hier nicht dargestellte Entriegelungsstellung, in der der Verriegelungsbolzen 16a mit der Öffnung 29 an dem Klappenteil 4a außer Eingriff gelangt, so dass dann das Klappenteil 4a gegenüber dem Grundkörper 5a in die Crashlage verschwenkt werden kann.

### Bezugszeichenliste

- 1, 1a: Fronthaubenscharnier
- 2: Scharnierunterteil
- 3, 3a: Scharnieroberteil
- 4 4a: Klappenteil
- 5, 5a: Grundkörper
- 6: Karosserieteil
- 7: Grundträger
- 8, 8a: Gelenkhebel
- 9: Antriebskörper/Schwenkhebel
- 10: Zahnrad
- 11, 11a: Antriebsvorrichtung
- 12, 12a: Gehäuse
- 13: Gleithebel
- 14: Führungsbolzen
- 15: Innenkontur
- 16, 16a: Verriegelungselement
- 17: Sollbruchstelle
- 18: Gelenkbolzen
- 19: Anschlagelement
- 20: Anschlagfläche
- 21: Gasgenerator
- 22: Gasaustrittsöffnung
- 23: Dichtauflage
- 24: Dämpfungselement
- 25: Mitnehmerscheibe
- 26: Befestigungsschraube
- 27: Befestigungsschraube
- 28: Verzahnung
- 29: Öffnung
- 30, 30a: Antriebswelle

## Patentansprüche

1. Fronthaubenscharnier zur gelenkigen Anordnung einer Fronthaube an einem Kraftfahrzeug, mit
- einem mit einem Karosseriebauteil verbindbaren Scharnierunterteil (2) und
- einem mit der Fronthaube verbindbaren Scharnieroberteil (3, 3a), wobei das Scharnieroberteil (3, 3a)
- einen gelenkig mit dem Scharnierunterteil (2) verbundenen Grundkörper (5, 5a) und
- ein an der Fronthaube anordbares, gelenkig mit dem Grundkörper (5, 5a) verbundenes und gegenüber diesem zwischen einer Normallage und einer Crashlage verstellbares Klappenteil (4, 4a) aufweist, und
- einer Antriebsvorrichtung (11, 11a) mit einem pyrotechnischen Gasgenerator (21), derderart mit dem Klappenteil (4, 4a) in Wirkverbindung befindlich ist, dass eine Aktivierung des Gasgenerators (21) eine Verlagerung des Klappenteils (4, 4a) aus der Normallage in die Crashlage bewirkt,
**dadurch gekennzeichnet, dass**
die Antriebsvorrichtung (11, 11a) einen auf einer Antriebswelle (30, 30a) angeordneten Antriebskörper (9) aufweist, der derart mit dem Gasgenerator (21) in Wirkverbindung befindlich ist, dass der bei einer Aktivierung des Gasgenerators (21) auftretende Gasdruck eine eine Verdrehung der Antriebswelle (30,30a) erzeugende Verschwenkung oder Verdrehung des Antriebskörpers (9) bewirkt.

2. Fronthaubenscharnier nach Anspruch 1, **dadurch gekennzeichnet, dass** der Antriebskörper durch einen verdrehfest auf der Antriebswelle (30, 30a) angeordneten Schwenkhebel (9) gebildet ist, der in einem Gehäuse (12, 12a) der Antriebsvorrichtung (11, 11a) an einer Gehäuseinnenwand abdichtend anliegend zwischen einer Ausgangslage und einer Endlage verschwenkbar gelagert ist.

3. Fronthaubenscharnier nach Anspruch 1 oder 2, **dadurch gekennzeichnet, dass** die Antriebswelle (30, 30a) mit einem mit dem Grundkörper (5, 5a) oder dem Klappenteil (4, 4a) in Wirkverbindung befindlichen Kopplungselement (10, 13) verbunden ist.

4. Fronthaubenscharnier nach einem der vorherigen Ansprüche, **dadurch gekennzeichnet, dass** die Antriebsvorrichtung (11) ortsfest mit dem Klappenteil (4) verbunden ist und als Kopplungselement einen verdrehfest auf der Antriebswelle (30) angeordneten Gleithebel (13) aufweist, der derart mit einem an dem Grundkörper (5) angeordneten Führungsbolzen (14) in Eingriff befindlich ist, dass eine Verstellung des Gleithebels (13) aus seiner der Ausgangslage des Schwenkhebels (9) zugeordneten Position in seine der Endlage des Schwenkhebels (9) zugeordnete Position eine Verlagerung des Klappenteils (4) in die Crashlage bewirkt.

5. Fronthaubenscharnier nach einem der vorherigen Ansprüche, **dadurch gekennzeichnet, dass** der Gleithebel: (13) über eine Innenkontur (15) verstellbar an dem Führungsbolzen (14) gelagert ist:

6. Fronthaubenscharnier nach einem der vorherigen Ansprüche, **dadurch gekennzeichnet, dass** die Antriebsvorrichtung (11a) ortsfest an dem Grundkörper (5a) angeordnet ist und einen verdrehfest mit der Antriebswelle (30a) verbundenen Mitnehmer, insbesondere eine Mitnehmerscheibe (25), aufweist, der mit einem drehbar an der Antriebsvorrichtung (11a) gelagerten und mit einer Verzahnung (28) an dem Klappenteil (4a) in Eingriff befindlichen Zahnrad (10) in Wirkverbindung befindlich ist.

7. Fronthaubenscharnier nach einem der vorherigen Ansprüche, **dadurch gekennzeichnet, dass** das Klappenteil (4, 4a) in der Crashlage gegenüber dem Grundkörper (5, 5a) in Richtung auf die Crashlage vorgespannt ist.

8. Fronthaubenscharnier nach einem der vorherigen Ansprüche, **dadurch gekennzeichnet, dass** das Klappenteil (4, 4a) durch eine an dem Mitnehmer (25) und dem Klappenteil (4, 4a) abgestützte Spiralfeder vorgespannt ist.

9. Fronthaubenscharnier nach einem der vorherigen Ansprüche, **dadurch gekennzeichnet, dass** das Klappenteil (4, 4a) in der Normallage. über ein entriegelbares Verriegelungselement (16, 16a) an dem Grundkörper (5, 5a) festgelegt ist.

10. Fronthaubenscharnier nach einem der vorherigen Ansprüche, **dadurch gekennzeichnet, dass** das Verriegelungselement durch ein mit dem Grundkörper (5) und dem Klappenteil (4) verbundenes, eine Sollbruchstelle(17) aufweisendes Halteelement (16) gebildet ist, wobei die Sollbruchstelle (17) derart ausgebildet ist, dass diese durch die bei der Aktivierung des Gasgenerators (21) auf das Halteelement (16) wirkende Belastung bricht.

11. Fronthaubenscharnier nach einem der vorherigen Ansprüche, **dadurch gekennzeichnet, dass** das Verriegelungselement durch ein Sperrelement (16a) gebildet ist, das in der Antriebsvorrichtung (11, 11a) zwischen einer das Klappenteil (4, 4a) an dem Grundkörper (5, 5a) festlegenden Verriegelungsstellung und einer das Klappenteil (4; 4a) gegenüber dem Grundkörper (5, 5a) freigebenden Entriegelungsstellung verstellbar ist.

12. Fronthaubenscharnier nach einem der vorherigen Ansprüche, **dadurch gekennzeichnet, dass** das Sperrelement (16a) derart in der Antriebsvorrichtung (11, 11a) angeordnet ist, dass eine Aktivierung des Gasgenerators (21) eine Verlagerung des Sperrelements (16a) aus der Verriegelungsstellung in die Entriegelungsstellung bewirkt.

13. Fronthaubenscharnier nach einem der vorhergehenden Ansprüche, **dadurch gekennzeichnet, dass** das Sperrelement durch einen verschiebbar gelagerten Verriegelungsbolzen (16a) gebildet ist, der bei einer ortsfest an dem Grundkörper (5a) angeordneten Antriebsvorrichtung (11a) in der Verriegelungsstellung in eine an dem Klappenteil (4a) ausgebildete Aufnahmeöffnung (29) eingreift.

## Claims

1. Bonnet hinge for articulated arrangement of a bonnet on a motor vehicle, having
- a hinge lower part (2) connectable to a body component and
- a hinge upper part (3, 3a) connectable to the bonnet, the hinge upper part (3, 3a) comprising
- a base body (5, 5a) articulatedly connected to the hinge lower part (2) and
- a flap part (4, 4a) arrangeable on the bonnet, articulatedly connected to the base body (5, 5a) and adjustable relative to the latter between a normal position and a crash position, and
- a drive device (11, 11a) having a pyrotechnic gas generator (21) which is operatively connected to the flap part (4, 4a) in such a manner that an activation of the gas generator (21) causes a displacement of the flap part (4, 4a) from the normal position to the crash position,
**characterised in that**
the drive device (11, 11a) comprises a drive body (9) arranged on a drive shaft (30, 30a) and operatively connected to the gas generator (21) in such a manner that the gas pressure occurring upon an activation of the gas generator (21) causes a pivoting or rotation of the drive body (9) producing a rotation of the drive shaft (30, 30a).

2. Bonnet hinge according to Claim 1, **characterised in that** the drive body is formed by a pivot lever (9) arranged in a rotationally fixed manner on the drive shaft (30, 30a) and mounted pivotably in a housing (12, 12a) of the drive device (11, 11a), in a manner bearing sealingly against a housing inner wall, between a starting position and an end position.

3. Bonnet hinge according to Claim 1 or 2, **characterised in that** the drive shaft (30, 30a) is connected to a coupling element (10, 13) operatively connected to the base body (5, 5a) or the flap part (4, 4a).

4. Bonnet hinge according to one of the preceding claims, **characterised in that** the drive device (11) is stationarily connected to the flap part (4) and comprises as coupling element a sliding lever (13) which is arranged in a rotationally fixed manner on the drive shaft (30) and is in engagement in such a manner with a guide pin (14) arranged on the base body (5) that an adjustment of the sliding lever (13) from its position assigned to the starting position of the pivot lever (9) to its position assigned to the end position of the pivot lever (9) causes a displacement of the flap part (4) to the crash position.

5. Bonnet hinge according to one of the preceding claims, **characterised in that** the sliding lever (13) is mounted adjustably on the guide pin (14) via an inner contour (15).

6. Bonnet hinge according to one of the preceding claims, **characterised in that** the drive device (11a) is stationarily arranged on the base body (5a) and comprises a carrier, in particular a carrier plate (25), connected in a rotationally fixed manner to the drive shaft (30a) and operatively connected to a toothed wheel (10) mounted rotatably on the drive device (11a) and in engagement with a toothing (28) on the flap part (4a).

7. Bonnet hinge according to one of the preceding claims, **characterised in that** the flap part (4, 4a) in the crash position is prestressed relative to the base body (5, 5a) in the direction of the crash position.

8. Bonnet hinge according to one of the preceding claims, **characterised in that** the flap part (4, 4a) is prestressed by a spiral spring supported on the carrier (25) and the flap part (4, 4a).

9. Bonnet hinge according to one of the preceding claims, **characterised in that** the flap part (4, 4a) in the normal position is secured to the base body (5, 5a) via an unlockable locking element (16, 16a).

10. Bonnet hinge according to one of the preceding claims, **characterised in that** the locking element is formed by a holding element (16) which is connected to the base body (5) and the flap part (4) and has a predetermined breaking point (17), the predetermined breaking point (17) being configured in such a manner that it breaks due to the load acting on the holding element (16) upon the activation of the gas generator (21).

11. Bonnet hinge according to one of the preceding claims, **characterised in that** the locking element is formed by a blocking element (16a) which is adjustable in the drive device (11, 11a) between a locking position securing the flap part (4, 4a) to the base body (5, 5a) and an unlocking position releasing the flap part (4, 4a) relative to the base body (5, 5a).

12. Bonnet hinge according to one of the preceding claims, **characterised in that** the blocking element (16a) is arranged in the drive device (11, 11a) in such a manner that an activation of the gas generator (21) causes a displacement of the blocking element (16a) from the locking position to the unlocking position.

13. Bonnet hinge according to one of the preceding claims, **characterised in that** the blocking element is formed by a displaceably mounted locking pin (16a) which in the locking position engages in a receiving opening (29) formed on the flap part (4a) when a drive device (11a) is arranged stationarily on the base body (5a).

## Revendications

1. Charnière de capot avant pour la disposition articulée d'un capot avant sur un véhicule automobile, avec
- une pièce de charnière inférieure (2) pouvant être reliée à un élément de carrosserie, et
- une pièce de charnière supérieure (3, 3a) pouvant être reliée au capot avant, ladite pièce de charnière supérieure (3, 3a) présentant
- un corps de base (5, 5a) relié de manière articulée à la pièce de charnière inférieure (2), et
- une partie de rabat (4, 4a) pouvant être disposée contre le capot avant, reliée de manière articulée au corps de base (5, 5a) et réglable par rapport à celui-ci entre une position normale et une position de collision, et
- un dispositif d'entraînement (11, 11a) avec un générateur de gaz pyrotechnique (21) qui se trouve en liaison active avec la partie de rabat (4, 4a), de telle manière qu'une activation du générateur de gaz (21) entraîne un déplacement de la partie de rabat (4, 4a) de la position normale vers la position de collision,
**caractérisée en ce que**
le dispositif d'entraînement (11, 11a) comporte un corps d'entraînement (9) disposé sur un arbre d'entraînement (30, 30a), lequel se trouve en liaison active avec le générateur de gaz (21), de telle manière que la pression de gaz générée lors d'une activation du générateur de gaz (21) entraîne un pivotement ou une rotation du corps d'entraînement (9) produisant une rotation de l'arbre d'entraînement (30, 30a).

2. Charnière de capot avant selon la revendication 1, **caractérisée en ce que** le corps d'entraînement est formé par un levier pivotant (9) disposé solidairement en rotation sur l'arbre d'entraînement (30, 30a), lequel est monté de manière pivotante entre une position initiale et une position finale dans un boîtier (12, 12a) du dispositif d'entraînement (11, 11a) en étant appliqué de manière étanche contre une paroi intérieure de boîtier.

3. Charnière de capot avant selon la revendication 1 ou 2, **caractérisée en ce que** l'arbre d'entraînement (30, 30a) est relié à un élément d'accouplement (10, 13) se trouvant en liaison active avec le corps de base (5, 5a) ou la partie de rabat (4, 4a).

4. Charnière de capot avant selon l'une des revendications précédentes, **caractérisée en ce que** le dispositif d'entraînement (11) est fixement raccordé à la partie de rabat (4) et présente comme élément d'accouplement un levier coulissant (13) monté solidairement en rotation sur l'arbre d'entraînement (30), lequel se trouve en prise avec un axe de guidage (14) monté sur le corps de base (5), de telle manière qu'un déplacement du levier coulissant (13) de sa position associée à la position initiale du levier pivotant (9) vers sa position associée à la position finale du levier pivotant (9) entraîne un déplacement de la partie de rabat (4) vers la position de collision.

5. Charnière de capot avant selon l'une des revendications précédentes, **caractérisée en ce que** le levier coulissant (13) est monté de manière déplaçable par un contour intérieur (15) sur l'axe de guidage (14).

6. Charnière de capot avant selon l'une des revendications précédentes, **caractérisée en ce que** le dispositif d'entraînement (11a) est fixement disposé contre le corps de base (5a) et comporte un entraîneur raccordé solidairement en rotation à l'arbre d'entraînement (30a), en particulier une rondelle d'entraînement (25), laquelle se trouve en liaison active avec une roue dentée (10) montée de manière rotative sur le dispositif d'entraînement (11a) et en prise avec une denture (28) sur la partie de rabat (4a).

7. Charnière de capot avant selon l'une des revendications précédentes, **caractérisée en ce que** la partie de rabat (4, 4a) est en position de collision pré-contrainte vers la position de collision par rapport au corps de base (5, 5a).

8. Charnière de capot avant selon l'une des revendications précédentes, **caractérisée en ce que** la partie de rabat (4, 4a) est pré-contrainte par un ressort hélicoïdal s'appuyant contre l'entraîneur (25) et la partie de rabat (4, 4a).

9. Charnière de capot avant selon l'une des revendications précédentes, **caractérisée en ce que** la partie de rabat (4, 4a) est en position normale fixée sur le corps de base (5, 5a) par un élément de verrouillage (16, 16a) déblocable.

10. Charnière de capot avant selon l'une des revendications précédentes, **caractérisée en ce que** l'élément de verrouillage est formé par un élément de maintien (16) relié au corps de base (5) et à la partie de rabat (4) et présentant un emplacement de moindre résistance mécanique (17), ledit emplacement de moindre résistance mécanique (17) étant réalisé de manière à annuler la contrainte exercée sur l'élément de maintien (16) lors de l'activation du générateur de gaz (21).

11. Charnière de capot avant selon l'une des revendications précédentes, **caractérisée en ce que** l'élément de verrouillage est formé par un élément de blocage (16a) déplaçable dans le dispositif d'entraînement (11, 11a) entre une position de verrouillage fixant la partie de rabat (4, 4a) contre le corps de base (5, 5a) et une position de déblocage libérant la partie de rabat (4, 4a) par rapport au corps de base (5, 5a).

12. Charnière de capot avant selon l'une des revendications précédentes, **caractérisée en ce que** l'élément de blocage (16a) est disposé dans le dispositif d'entraînement (11, 11a) de telle manière qu'une activation du générateur de gaz (21) entraîne un déplacement de l'élément de blocage (16a) de la position de verrouillage vers la position de déblocage.

13. Charnière de capot selon l'une des revendications précédentes, **caractérisée en ce que** l'élément de blocage est formé par un axe de verrouillage (16a) monté de manière mobile, lequel, dans le cas d'un dispositif d'entraînement (11a) fixement monté sur le corps de base (5a), s'engage en position de verrouillage dans une ouverture de réception (29) formée sur la partie de rabat (4a).
